# EUROPEAN PATENT SPECIFICATION

(11) **EP 2 494 538 B1**
(45) Date of publication and mention of the grant of the patent: **04.03.2015**
(21) Application number: 10827127.1
(22) Date of filing: 29.10.2010
(51) Int. Cl.: G09F 3/10, B32B 27/00, B44C 3/08, B44C 1/17, B44C 1/10

(54) **METHOD OF ADHERING AN EXTERIOR FILM TO A HOME APPLIANCE**
VERFAHREN ZUR ANBRINGUNG EINES AUSSENFILMS AN EINEM HAUSHALTSGERÄT
PROCÉDÉ POUR FAIRE ADHÉRER UN FILM EXTÉRIEUR À UN APPAREIL DOMESTIQUE

(30) Priority: 30.10.2009 KR 20090104550
(43) Date of publication of application: 05.09.2012
(73) Proprietor: LG Electronics Inc., Seoul 150-721 (KR)
(72) Inventor: JUNG, Hyungi, Seoul 153-802 (KR); JUN, Hyunwoo, Seoul 153-802 (KR)
(74) Representative: Vossius & Partner
(86) International application number: PCT/KR2010/007527
(87) International publication number: WO 2011/053043

(56) References cited:
- WO-A1-2009/123417
- WO-A2-02/062591
- WO-A2-2011/019198
- GB-A- 2 187 023
- KR-A- 20020 031 903
- KR-B1- 100 225 413
- KR-Y1- 200 435 526

## Description

### Technical Fields.

The present disclosure relates to a method of adhering an exterior film for a home appliance.

### Background Art

Generally, in home appliances such as refrigerators, washing machines, cooking appliances, air-conditioners, and dishwashers, a main body or a door is formed of a metal plate or plastic. The main body or door has various colors, textures, or patterns.

Such home appliances are being elegant and distinguished in design according to the increase of the living standards and consumer preference. In particular, since the design of home appliances as well as the functions is currently recognized as an important factor for deciding a purchase, home appliances having various patterns, colors, and textures are being developed.

For example, an exterior member forming the front surface of the main body or door of a home appliance may be formed of a vinyl coated metal (VCM) plate with various colors and patterns. Also, to express various colors and textures and provide deluxe feeling, an exterior member forming at least one portion of the appearance of a home appliance may be formed of a tempered glass panel. Thus, home appliances and exterior members having elegance and unique appearances are being developed.

In particular, tempered glass printed with various colors and patterns is recently used as exterior members for forming the main body of a home appliance or at least one portion of the front surface thereof. Such tempered glass is preferred by a user due to its proper texture and various colors and patterns.

Typically, a silk screen process is performed on an exterior member formed of tempered glass to directly print colors and patterns on the exterior member. However, since the silk screen process is discontinuously and slowly performed with a high defect rate, the silk screen process may be inefficient with high production costs.

To address these limitations, an appearance forming technology has been developed in which a gravure printing process is performed on a film type material to print a color and a pattern thereon and the film type material is adhered to an exterior member formed of tempered glass, thereby improving the workability.

WO 2011/019198 which is prior art in the sense of Article 54 (3) EPC relates to an exterior film for a home appliance, including a removable cut portion formed by half-cutting.

### Disclosure of Invention

The present invention is defined by the claims.

Embodiments provide an exterior film for a home appliance, which is formed by performing a half cutting process on a portion of a through part disposed on an exterior part of the home appliance, so that the portion of the through part can be removed while a support protective film is removed, and the rest thereof is cut out after the removing of the support protective film.

Embodiments also provide a method of adhering an exterior film for a home appliance, in which a half cutting process is performed on cutting parts of the exterior film corresponding to a through part disposed on an exterior part of the home appliance, and the exterior film is adhered to the exterior part and then is removed together with a support protective film, and connection parts for connecting separate patterns or manipulation display parts formed by the through part are cut out after the removing of the support protective film.

The exterior part may be formed of glass for forming the appearance of the home appliance.

When the main film is adhered to the exterior part of the home appliance, the adhesive protective film may be removed except for the cutting part.

The cutting part may be formed by a cutting mold of a Thompson press configured to cut a part except for the connection part along the pattern or manipulation display part.

The connection part may connect parts of the divided pattern or manipulation display part to each another.

The connection part may be provided in plurality within the through part from a removal start position where a removal of the support protective film starts.

When the connection part is provided in plurality, the connection parts may be cut out using a jig having a shape corresponding to the connection parts.

When the adhesive protective film is removed, a rest of the adhesive protective film except for a portion of the adhesive protective film corresponding to the cutting part may be removed.

The method may further include a washing process for removing the connection part after the cutting of the connection part.

The details of one or more embodiments are set forth in the accompanying drawings and the description below. Other features will be apparent from the description and drawings, and from the claims.

### Advantageous Effects of Invention

In the exterior film and the method of adhering the same according to the embodiments, the Thompson press performs the half-cutting process on the cutting parts of the exterior film corresponding to the through part provided to the exterior part, and the connecting parts connecting separate patterns formed by the through part are cut after the support protective film is removed.

Thus, since the through part is disposed in the upper portion of the exterior film except for the support protective film constituting the bottom portion of the exterior film, the through part can be formed by removing the support protective film after the adhering of the exterior film.

At this point, since separated parts of a pattern formed by the through part are connected by the connection parts, the parts of the patterns can be prevented from being removed or damaged during the peeling off of the support protective film.

The cutting parts are removed first during the removing of the support protective film, and then, the connection parts are cut out using the separate jig.

Thus, the exterior film can be fabricated through a simpler process, and the cutting parts corresponding to the through part can be conveniently removed, thereby improving the workability and productivity thereof.

In addition, by using the connection parts, a complicated pattern can be formed by the through part, and a plurality of separate patterns can be more quickly formed. Furthermore, defects of patterns can be significantly reduced.

### Brief Description of Drawings

Fig. 1 is a perspective view illustrating a refrigerator including an exterior film for a home appliance according to an embodiment.
Fig. 2 is a perspective view illustrating a washing machine including an exterior film for a home appliance according to an embodiment.
Fig. 3 is a perspective view illustrating an indoor unit of an air conditioner including an exterior film for a home appliance according to an embodiment.
Fig. 4 is a cross-sectional view illustrating an exterior film for a home appliance before being processed, according to an embodiment.
Fig. 5 is a cut-away perspective view illustrating half cutting of an exterior film for a home appliance according to an embodiment.
Fig. 6 is a bottom view illustrating a mold for half cutting of an exterior film for a home appliance according to an embodiment.
Fig. 7 is a cross-sectional view illustrating an exterior film for a home appliance when being adhered to an exterior part according to an embodiment.
Fig. 8 is a cross-sectional view illustrating a support protective film of an exterior film for a home appliance when being removed, according to an embodiment.
Fig. 9 is a partial cut-away perspective view illustrating an exterior film for a home appliance when being adhered to an exterior part, according to an embodiment.
Fig. 10 is a front view illustrating an exterior glass to which an exterior film for a home appliance is adhered, according to an embodiment.
Fig. 11 is a cross-sectional view illustrating connection parts of an exterior film for a home appliance when being removed, according to an embodiment.
Fig. 12 is a perspective view illustrating a jig for removing connection parts of an exterior film for a home appliance, according to an embodiment.
Fig. 13 is a front view illustrating an exterior part to which an exterior film for a home appliance is adhered, according to an embodiment.
Figs. 14 and 15 are schematic views illustrating a method of fabricating an exterior film for a home appliance according to an embodiment.

### Mode for the Invention

Reference will now be made in detail to the embodiments of the present disclosure, examples of which are illustrated in the accompanying drawings.

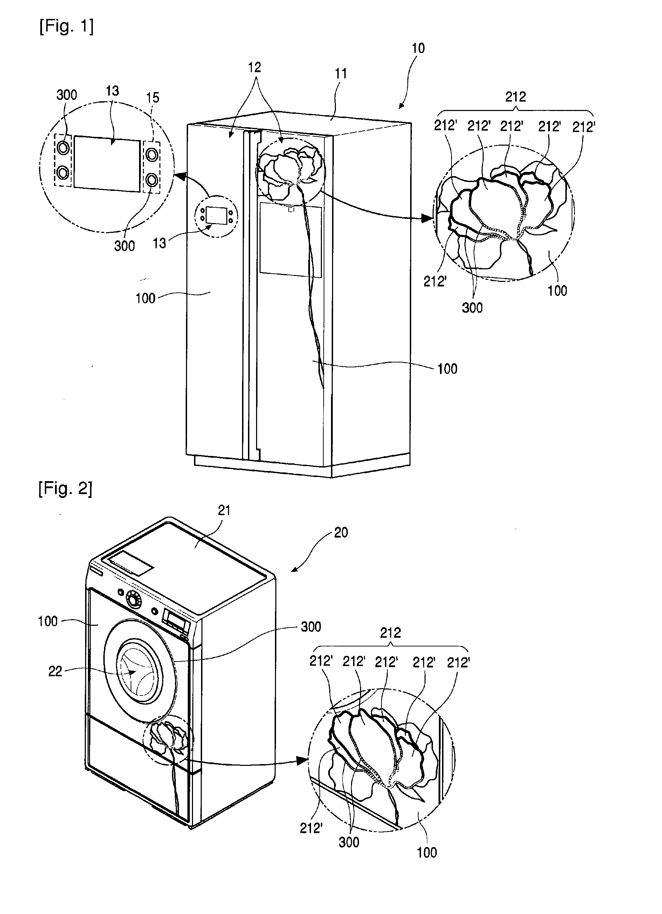

Fig. 1 is a perspective view illustrating a refrigerator including an exterior film for a home appliance according to an embodiment.

Referring to Fig. 1, a refrigerator 10 includes a main body 11 that forms a storing space, and doors 12 that open/close the storing space. The main body 11 and the doors 12 form an appearance of the refrigerator 10. The doors 12 form the front surface of the refrigerator 10.

The front surface of the doors 12 is provided with an exterior part 100 formed of tempered glass. A main film 210, which constitutes an exterior film 200 to be described later and is printed with a color or pattern exposed to the outside, may be adhered to the rear surface of the exterior part 100.

The doors 12 may be provided with through parts 300. The through part 300 is configured to see the inside of the exterior part 100 from the outside thereof, and may be formed by cutting a portion of the exterior film 200, and more particularly, the main film 210 to be described later.

The through part 300 may form at least one portion of a pattern 212 formed by the main film 210. The through part 300 may have a predetermined width, and have a shape for corresponding to a flower or a geometric pattern. A light emitting member for emitting light or a jewel such as a glass jewel or a Swarovski jewel is installed at a position corresponding to the through part 300 forming the pattern 212, and is exposed through the through part 300 to improve the appearance of the door 12.

Parts 212' constituting the pattern 212 may be spaced apart from one another to variously and three-dimensionally express the pattern 212 of the through part 300.

The through part 300 may form a manipulation display part 15 for manipulating a display 13 or the refrigerator 10. The through part 300 is disposed at a position to correspond to the display 13 for displaying an operation of the refrigerator 10, to expose the display 13 to the outside, and the manipulation display part 15 such as a button or a character for a manipulation may be disposed at a position corresponding to a part that a user manipulates, and be displayed to the outside.

The manipulation display part 15 may be completely separated from the other parts to display a part such as a button, and a periphery thereof may be formed by the through part 300. Light may be directly/indirectly irradiated through the through part 300 to improve the visibility of the manipulation display part 15.

Fig. 2 is a perspective view illustrating a washing machine including an exterior film for a home appliance according to an embodiment.

Referring to Fig. 2, a washing machine 20 includes a main body 21 that has a space for washing a laundry, and a door 22 that opens/closes the space of the main body 21. The main body 21 and the door 22 form an appearance of the washing machine 20.

The door 22 is disposed on the front surface of the main body 21, and at least one portion thereof is transparent to show the inside of the door 22.

The front surface of the main body 21 may be formed by the exterior part 100 of tempered glass. The exterior part 100 forms the front surface of the main body 21 except for the door 22, and the main film 210, which constitutes the exterior film 200 to be described later and is provided with a color or pattern exposed to the outside, is adhered to the rear surface of the exterior part 100 and forms the appearance of the exterior part 100.

The open through part 300 is disposed in the central portion of the exterior part 100 provided with the door 22 to show the washing space of the main body 21 through the door 22. The main film 210 may be adhered to the entire rear surface of the exterior part 100 except for the through part 300.

The main film 210 adhered to the rear surface of the exterior part 100 may be provided with a through part as illustrated in Fig. 1, to form a pattern.

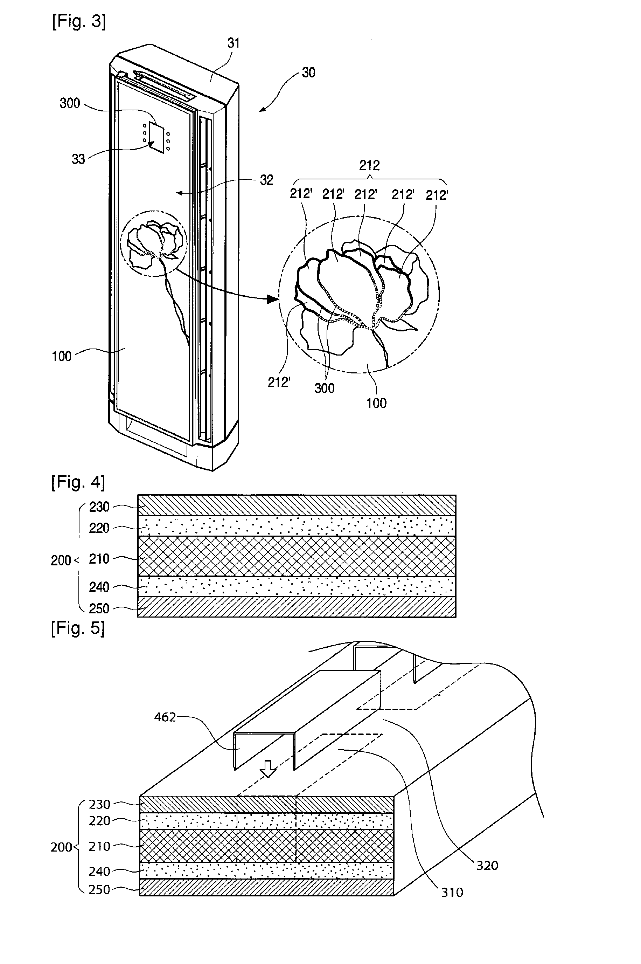

Fig. 3 is a perspective view illustrating an indoor unit of an air conditioner including an exterior film for a home appliance according to an embodiment.

Referring to Fig. 3, a main body 31, which accommodates an evaporator and a fan motor assembly, forms an appearance of an indoor unit 30 of an air conditioner. The front surface of the main body 31 is provided with a front cover 32 including the exterior part 100 of tempered glass, and the front cover 32 may be configured to open and close the inside of the main body 31.

The main film 210, which constitutes the exterior film 200 to be described later and is printed with a color or pattern exposed to the outside, may be adhered to the rear surface of the exterior part 100.

The exterior part 100 may include a display 33. The display 33 displays an operation state of the air conditioner, so that the operation state can be checked at the outside through the through part 300 of the exterior part 100.

Thus, the main film 210 adhered to the exterior part 100 may be adhered to the entire rear surface of the exterior part 100 except for the through part 300 to form the appearance of the indoor unit 30.

The through part 300 may be provided to a manipulation display part for manipulating the indoor unit 30 adjacent to the display 33, and be formed along a specific pattern to be formed on the exterior part 100.

Fig. 4 is a cross-sectional view illustrating an exterior film for a home appliance before being processed, according to an embodiment.

Referring to Fig. 4, the exterior film 200 may include an adhesive protective film 230, a main adhesive 220, a main film 210, an auxiliary adhesive 240, and a support protective film 250, so that the exterior film 200 can be adhered to the rear surface of the exterior part 100 that is transparent or translucent part such as tempered glass.

In detail, the main film 210 is used to express a color and a pattern to the outside, and is formed by performing a gravure printing process on a polyethylene terephthalate (PET) or poly vinyl chloride (PVC) film.

A coating layer for protecting a gravure-printed surface may be disposed on the upper or lower surface of the main film 210, and a support layer for emphasizing or varying a printed color and a printed pattern may be disposed on the lower surface of the main film 210.

The main film 210 may be gravure-printed using ink mixed with, e.g., metal flakes to provide a metal or pearl texture.

The main adhesive 220 is applied on the upper surface of the main film 210. The main adhesive 220 is used to adhere the main film 210 to the rear surface of an exterior part, and may be a typical adhesive for adhering a film. The main adhesive 220 may be mixed with metal flakes for providing a metal texture.

The adhesive protective film 230 may be disposed on the upper surface of the main adhesive 220. The adhesive protective film 230 may be formed of resin such as PET or PVC to protect the main adhesive 220 while the exterior film 200 is fabricated or distributed.

The adhesive protective film 230 may be removed when the main film 210 is adhered to the exterior part 100, and the rest of the adhesive protective film 230 except for cutting parts 310 to be described later is removed to expose the main adhesive 220 through the upper surface of the exterior film 200.

The auxiliary adhesive 240 is applied on the lower surface of the main film 210. The auxiliary adhesive 240 is used to adhere the support protective film 250, and the auxiliary adhesive 240 and the support protective film 250 are removed after the main film 210 is adhered to the exterior part 100.

The auxiliary adhesive 240 and the main adhesive 220 may be formed of the same material, and the support protective film 250 and the adhesive protective film 230 may be formed of the same material.

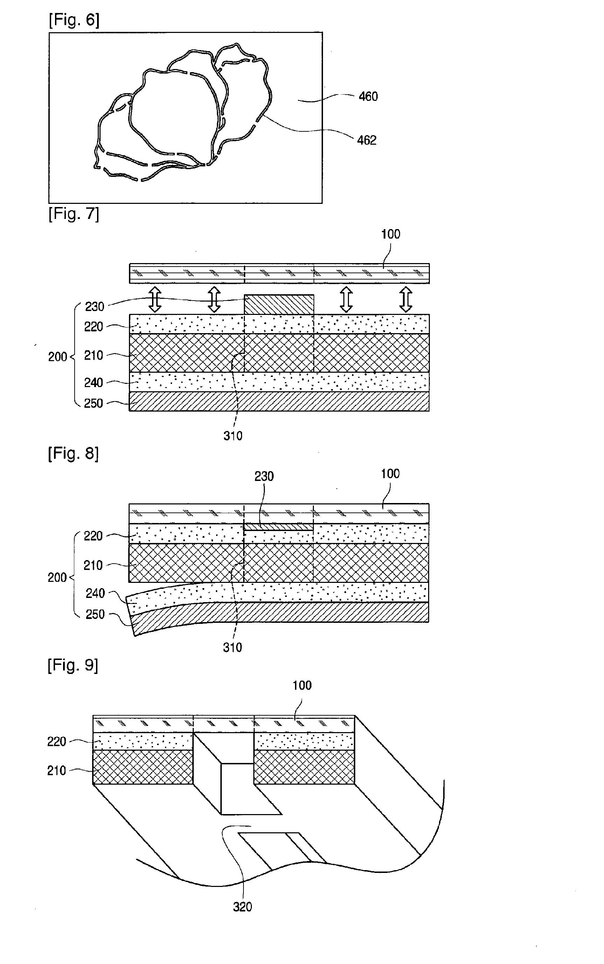

Fig. 5 is a cut-away perspective view illustrating half cutting of an exterior film for a home appliance according to an embodiment. Fig. 6 is a bottom view illustrating a mold for half cutting of an exterior film for a home appliance according to an embodiment. Fig. 7 is a cross-sectional view illustrating an exterior film for a home appliance when being adhered to an exterior part according to an embodiment. Fig. 8 is a cross sectional view illustrating a support protective film of an exterior film for a home appliance when being removed, according to an embodiment. Fig. 9 is a partial cut-away perspective view illustrating an exterior film for a home appliance when being adhered to an exterior part, according to an embodiment.

Referring to Figs. 5 to 9, the cutting parts 310 and connection parts 320 are provided to the exterior film 200 to form the through part 300 on the exterior part 100.

The cutting parts 310 are disposed in a region corresponding to the trough part 300 of the exterior part 100 when the main film 210 is adhered to the rear surface of the exterior part 100. A half-cutting process using a Thomson press 400 is performed on the cutting parts 310 to be removed in a single process.

In detail, the cutting parts 310 are removed after the attaching of the main film 210. Thus, although the main film 210 is attached, since the cutting parts 310 are removed, the through part 300 provided to the exterior part 100 shows the inside.

The cutting parts 310 have a shape corresponding to the shape of the through part 300. The Thomson press 400 partially cut the adhesive protective film 230, the main adhesive 220, and the main film 210.

That is, the half-cutting process using the Thomson press 400 is performed on the cutting parts 310, and the cutting parts 310 are formed at the position corresponding to the exterior film 200. Then, when the support protective film 250 is pulled out to remove the cutting parts 310, the cutting parts 310 are also pulled out and removed from the exterior film 200.

The Thomson press 400 includes a trimming mold 460 that performs the half-cutting process on the cutting parts 310 to form the through part 300. The trimming mold 460 has a shape corresponding to the shape of the through part 300, and performs the half-cutting process on only the cutting parts 310 except for the connection partis 320.

That is, cutters 462 of the trimming mold 460 are disposed along the shape of the through part 300 to perform the half-cutting process on the rest of the througt part 300 except for the connection parts 320.

The cutters 462 may have a length such that the Thomson press 400 vertically moves to cut only the adhesive protective film 230, the main adhesive 220, and the main film 210.

The cutting parts 310 have a shape corresponding to the shape of the through part 300. When the adhesive protective film 230 is removed to adhere the main film 210, the adhesive protective film 230 may be removed except for the portion corresponding to the cutting parts 310.

After the main film 210 is adhered to the exterior part 100, the support protective film 250 is removed. At this point, the cutting parts 310 ape removed together with the auxiliary adhesive 240 and the support protective film 250.

The Thomson press 400 presses the cutting part 310 from the upper surface of the adhesive protective film 230 and performs the half cutting process on only the adhesive protective film 230, the main adhesive 220, and the main film 210.

At this point, the cutting part 310 is removed by removing the auxiliary adhesive 240 and the support protective film 250.

The cutting parts 310 are disposed along the through part 300 shown on the exterior part 100. When the main film 210 is divided into separate parts by the through part 300, and the separate parts form a pattern, the connection parts 320 are disposed in portions of the through part 300 to connect the separate parts to one another.

That is, the through part 300 may be formed by finally removing the cutting parts 310 and the connection parts 320. The cutting parts 310 form the rest of the through part 300 except for the connection parts 320, and form the main part of the through part 300.

The connection parts 320 prevent separate parts of the pattern 212 formed on the main film 210 from being removed while the support protective film 250 is removed for forming the through part 300.

The connection parts 320 connect the parts 212' of the pattern 212 to one another. Thus, when the support protective film 250 is removed, the cutting parts 310 are removed, but the pattern 212 is secured. The number of the connection parts 329 depends on the number of the part 212' of the pattern 212.

Hereinafter, a flower pattern will now be exemplified as the pattern 212 formed on the exterior part 100 through the through part 300.

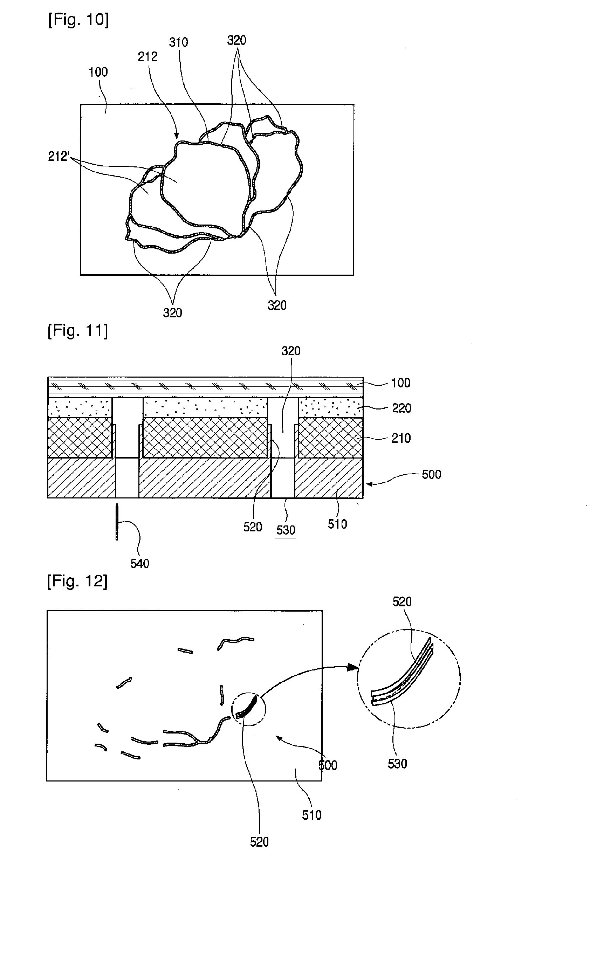

Fig.10 is a front view illustrating an exterior glass to which an exterior film for a home appliance is adhered, according to an embodiment

Referring to Fig. 10, after the half-cutting process is performed on the exterior film 200, and the exterior film 200 is adhered to the exterior part 100 formed of tempered glass to form a flower pattern.

At this point, the exterior film 200 is adhered to the rear surface of the exterior part 100 in the state where only the portion of the adhesive protective film 230 corre-sponding to the through part 300 is left. In this state, when the support protective film 250 is removed, the cutting parts 310 corresponding to the through part 300 is also removed, and the rest of the main film 210 is still adhered to the reat surface of the exterior part 100 by the main adhesive 220.

Also, the connection parts 320 forming the rest of the through part 300 except for the cutting parts 310 are still adhered to the rear surface of the exterior part 100, and thus, the parts 212' forming the pattern 212 are still adhered to the rear surface of the exterior part 100.

In detail, the through part 300 forms a plurality of petals (also denoted by 212') to express a three dimensional flower pattern (also denoted by 212) through the exterior part 100, and the petals 212' contact one another through the through part 300 as boundaries.

The connection parts 320 are disposed in the region of the through part 300 out of the cutting parts 310 to connect the petals 212' to one another. At least one of the connection parts 320 is disposed between the petals 212', and a first forming position of the connection parts 320 may be determined according to a direction that the support protective film 250 is removed.

In detail, when the support protective film 250 is peeled off upward, one of the connection parts 320 is disposed in the lowest portion of the through part 300. Thus, when the support protective film 250 is peeled off, the one of the connection part 320 prevents a first contact portion of the pattern 212 with the through part 300 from being removed from the rear surface of the exterior part 100. A portion of the through part 300 may be branched into two parts, in which the pattern 212 is susceptible to peeling off from the rear surface of the exterior part 100. The connection part 320 may also be disposed at the portion branched into two parts.

The connection parts 320, which prevent a pattern including a plurality of parts from being removed while the support protective film 250 is removed, may not be long, and may have a length corresponding to the width of the through part 300. After the support protective film 250 is removed, a jig 500 may be used to easily cut the connection parts 320.

Fig. 11 is a cross-sectional view illustrating connection parts of an exterior film for a home appliance when being removed, according to an embodiment. Fig. 12 is a perspective view illustrating a jig for removing connection parts of an exterior film for a home appliance, according to an embodiment.

Referring to Figs. 11 and 12, when the support protective film 250 is removed after the main film 210 is adhered to the rear surface of the exterior part 100 of tempered glass, the cutting parts 310 are also removed, and only the connection parts 320 are left in the through part 300.

In this state, to remove the connection parts 320, the jig 500 corresponding to the size of the exterior part 100 or the size of a pattern formed on the exterior part 100 is placed on the main film 210.

At this point, the jig 500 may include a jig plate 510 corresponding to the size of the exterior part 100 or the size of a pattern formed on the exterior part 100, guide parts 520 protruding from the jig plate 510 and inserted in the through part 300, and opening parts 530 giving cutters 540 access to the guide parts 520.

The guide parts 520 corresponding to the shape of the through part 300 are adjacent to the connection parts 320, and have a length and a width such that the guide parts 520 closely contact both inner side surfaces of the through part 300 when the jig 500 is placed on the main film 210.

The guide parts 520 are disposed at the front and rear sides of the cutting parts 310, and the opening parts 530 have a shape corresponding to the through part 300. Thus, after the jig 500 is installed, when a cutting process using the cutters 540 is performed along the opening parts 530, the cutters 540 move along the through part 300 to cut the connection parts 320.

Since the jig 500 includes the guide parts 520 and the opening parts 530 at positions corresponding to all the connection parts 320 provided to the main film 210, all the connection parts 320 can be removed using the cutters 540 just in a single process that the jig 500 is placed on the main film 210.

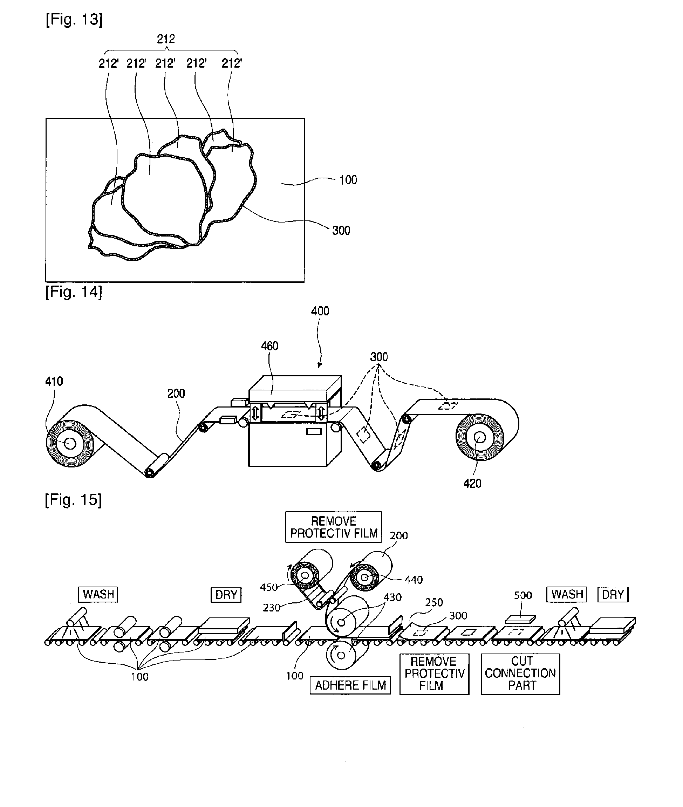

Fig. 13 is a front view illustrating an exterior part to which an exterior film for a home appliance is adhered, according to an embodiment.

Referring to Fig. 13, when the cutting parts 310 and the connection parts 320 are removed from the main film 210 of the exterior film 200, the through part 300 is completed, so that the pattern 212 as an intended pattern or a manipulation part can be formed on the exterior part 100.

The inside of the through part 300 can be shown at the front side of the exterior part 100. The exterior part 100 provided with the exterior film 200 may be used to expose a color at the rear side of the through part 300 or a jewel member through the through part 300, or directly/indirectly emit light therethrough.

Hereinafter, a method of fabricating an exterior film configured as described above, and a method of adhering the exterior film will now be described according to an embodiment with reference to the accompanying drawings.

Figs. 14 and 15 are schematic views illustrating a method of fabricating an exterior film for a home appliance according to an embodiment.

Referring to Figs. 14 and 15, the exterior film 200 is formed by applying the main adhesive 220 on the upper surface of the gravure-printed main film 210, adhering the adhesive protective film 230 to the main adhesive 220, applying the auxiliary adhesive 240 on the lower surface of the main film 210, and adhering the support protective film 250 to the main adhesive 220.

The exterior film 200 is wound in the form of a roll around a supply winder 410, and the wound exterior film 200 is continuously supplied to the Thomson press 400. While the wound exterior film 200 is continuously supplied, the Thomson press 400 forms the cutting parts 310 in the exterior film 200.

At this point, the cutting parts 310 are formed using the cutters 462 provided to the trimming mold 460 of the Thomson press 400, and the cutters 462 perform the half-cutting process on only the cutting parts 310 of the through part 300 except for the connection parts 320.

The cutting parts 310 are formed by simultaneously performing the half cutting process on the adhesive protective film 230, the adhesive 220, and the main film 210 and have a shape corresponding to the through part 300 of the exterior part 100.

The exterior film 200 discharged from the Thomson press 400 is wound again in the form of a roll around a winder 420, and then, is stoned or distributed.

The exterior part 100 formed of tempered glass is cut to an intended size, and then, undergoes a washing process, and is cleaned and dried. After that, the exterior part 100 passes through compression rollers 430, so that the main 210 of the exterior film 200 can be adhered to the exterior part 100.

In detail, when the adhesive protective film 230 of the exterior film 200 wound in the form of a roll around a supply winder 440 is installed on a film separation winder 450, the adhesive protective film 230 is separated from the film separation winder 450 and is supplied to the exterior film 200, and the exterior film 200 passes through the compression rollers 430 and is adhered to the exterior part 100.

After the exterior film 200 is discharged from the compression rollers 430, the support protective film 250 is removed from the exterior film 200. At this point, the cutting parts 310 are also removed.

When the support protective film 250 is removed, the connection parts 320 maintain the connection state between the separate parts of the pattern 212 formed by the through part 306 and prevent the pattern 212 from being removed during the peeling off of the support protective film 250, and thus, secure the entire shape of the pattern 212.

In this state, the jig 500 is placed on the main film 210. At this point, the guide parts 520 of the jig 500 are disposed on the inner surfaces of the through part 300, and the connection parts 320 are disposed in the opening parts 530, so that the connection parts 320 can be cut using the cutters 540.

After all the connection parts 320 are cut, the jig 500 is removed, and contact surfaces with the main film 210 are washed to remove the cut connection parts 320. After that, the exterior part 100 is finally dried.

The inside of the exterior part 100 can be shown through the through part 300 of the exterior part 100 by completely removing the connection parts 320. Thus, when the exterior part 100 is installed, the pattern 212 can be expressed through the through part 300.

Hereinafter, a method of forming the exterior film 200 and a method of adhering the main film 210 will now be described in more detail with reference to Figs. 4 to 11.

To form the main film 210, a gravure printing process is performed on a resin material that is the material of the main film 210. At this point, a protective layer for protecting a printed layer, or ah emphasizing layer for emphasizing a printed color of pattern as well as a gravure-printed layer may be formed on the main film 210.

The main adhesive 220 is applied on the upper surface of the main film 210, and the adhesive protective film 230 is adhered to the main film 210 by the applied main adhesive 220. The auxiliary adhesive 240 is applied on the lower surface of the main film 210, and the support protective film 250 is adhered to the main film 210 by the auxiliary adhesive 240, Accordingly, the exterior film 200 as illustrated in Fig. 4 is completed.

After that, the trimming mold 460 of the Thomson press 400 performs the half-coating process on the exterior film 200 to form the cutting parts 310 as illustrated in Figs. 5 and 9. Through the half cutting process, the cutting parts 310 are cut in dashed line from the upper surface of the adhesive rotective film 230 to to the upper surface of the auxiliary adhesive 240. The trimming mold 460 cuts only the rest of the througt part 300 except for the connection parts 320. Thus, when the support protective film 250 is removed; only the cutting parts 310 are removed together with the supped protective film 250,

After the cutting of the cutting partis 310 is completed, the adhesive protective film 230 is removed from the exterior film 200. When the adhesive protective, film 230 is removed, the rest of the main adhesive 220 except for the cutting parts 310 is exposed to be adhered to the rear surface of the exterior part 100.

Ih this state, the exterior film 200 is adhered to the rear surface of the exterior part 100 as illustrated in Fig. 8. At this point, the rest of the main adhesive 220 except for the cutting parts 310 is adhered to the rear surface of the exterior part 100, and the parts of the adhesive protective film 230 forming the cutting parts 310 contact the exterior part 100, so that the cutting parts 310 are substantially not adhered to the exterior part 100.

In this state, when the support protective film 250 is removed, and the auxiliary adhesive 240 adhered to the support protective film 250 is also removed, the cutting parts 310 adhered to the support protective film 250 by the auxiliary adhesive 240 are also removed.

That is, since the main film 210 corresponding to the cutting parts 310, the main adhesive 220, and the adhesive protective film 230 are not adhered to the exterior part 100, the cutting parts 310 adhered to the support protective film 250 are removed together with the support protective film 250.

Thus, as illustrated in Fig. 9, the auxiliary adhesive 240 and the cutting parts 310 are removed just in a single process that the support protective film 250 is removed from the exterior film 200, and the main adhesive 220 maintains the adhered state of the main film 210 to the exterior part 100.

Even when a pattern formed on the main film 210 is divided into parts by the through part 300, the connection parts 320 connect the divided parts to one another, thereby facilitating the removing of the cutting parts 310.

After the cutting parts 310 and the support protective film 250 are removed, the connection parts 320 are cut using the jig 500 to form the through part 300 in the main film 210. Thus, the exterior part 100 is completed, and the inside of the exterior part 100 can be shown from the outside thereof.

Although embodiments have been described with reference to a number of illustrative embodiments thereof, it should be understood that numerous other modifications and embodiments can be devised by those skilled in the art that will fall within the scope of the appended claims. More particularly, various variations and modifications are possible in the component parts and/or arrangements of the subject combination arrangement within the scope of the appended claims. In addition to variations and modifications in the component parts and/or arrangements, alternative uses will also be apparent to those skilled in the art.

### Industrial Applicability

According to the embodiments, the exterior film can be fabricated through a simpler process, and the cutting parts corresponding to the through part can be conveniently removed, thereby improving the workability and productivity thereof.

## Claims

1. A method of adhering an exterior film for a home appliance, the method comprising:
printing a color and a pattern (212) for forming an appearance on a main film (210);
applying a main adhesive (220) to an upper surface of the main film (210);
adhering an adhesive protective film (230) to the main adhesive (220);
applying an auxiliary adhesive (240) to a lower surface of the main film (210);
adhering a support protective film (250) to the auxiliary adhesive (240);
forming cutting parts (310) by half cutting defined as cutting the adhesive protective film (230), the main adhesive (220) and the main film (210) only, wherein connection parts (320) are formed between adjacent cutting parts (310) and the connection parts (320) are uncut during the half cutting,
the cutting parts (310) and the connection parts (320) being shaped, when both removed, to form a through part (300) so that the pattern (212) is formed on an exterior part (100) of the home appliance,
the cutting parts (310) being shaped, when removed, to form a main part of the through part (300);
removing the adhesive protective film (230);
adhering the main film (210) to the exterior part (100) of the home appliance by using the main adhesive (220);
removing the support protective film (250) to remove the auxiliary adhesive (240) and the cutting parts (310), thereby forming the main part of the through part (300); and
placing a jig (500) at a position corresponding to the connection parts (320) to cut the connection parts (320), thereby completing the through part (300) so that the pattern (212) is formed on the exterior part (100) of the home appliance.

2. The method according to claim 1, wherein when the adhesive protective film (230) is removed, rest of the adhesive protective film (230) except for a portion of the adhesive protective film (230) corresponding to the cutting parts (310) is removed.

3. The method according to claim 1, further comprising a washing process for removing the connection part (320) after the cutting of the connection part (320).

4. The method according to claim 1, wherein when the support protective film (250) is removed, the auxiliary adhesive (240), the main film (210) corresponding to the cutting parts (310), the main adhesive (220) corresponding to the cutting parts (310) and the adhesive protective film (230) corresponding to the cutting parts (310) are removed together with the support protective film (250).

## Patentansprüche

1. Verfahren zum Anbringen einer Außenfolie für ein Haushaltsgerät, wobei das Verfahren aufweist:
Aufdrucken einer Farbe und eines Musters (212) auf eine Hauptfolie (210), um ein Aussehen zu erzeugen;
Auftragen eines Hauptklebstoffs (220) auf eine obere Oberfläche der Hauptfolie (210);
Anbringen einer Klebstoffschutzfolie (230) auf dem Hauptklebstoff (220);
Auftragen eines Hilfsklebstoffs (240) auf eine untere Oberfläche der Hauptfolie (210);
Anbringen einer Trägerschutzfolie (250) auf dem Hilfsklebstoff (240);
- Erzeugen von Schneidebereichen (310) durch halbes Schneiden, das definiert ist als Schneiden nur der Klebstoffschutzfolie (230), des Hauptklebstoffs (220) und der Hauptfolie (210), wobei zwischen benachbarten Schneidebereichen (310) Verbindungsbereiche (320) gebildet werden und die Verbindungsbereiche (320) während des halben Schneidens nicht geschnitten werden,
die Schneidebereiche (310) und die Verbindungsbereiche (320) so gestaltet werden, um, wenn beide weggenommen sind, einen durchbrochenen Bereich (300) zu bilden, so dass an einem Außenelement (100) des Haushaltsgeräts das Muster (212) entsteht,
die Schneidebereiche (310) so gestaltet werden, um, wenn sie weggenommen sind, einen Hauptteil des durchbrochenen Bereichs (300) zu bilden;
- Entfernen der Klebstoffschutzfolie (230);
- Anbringen der Hauptfolie (210) an dem Außenelement (100) des Haushaltsgeräts unter Verwendung des Hauptklebstoffs (220);
- Entfernen der Trägerschutzfolie (250), um den Hilfsklebstoff (240) und die Schneidebereiche (310) zu entfernen, um dadurch den Hauptteil des durchbrochenen Bereichs (300) zu bilden; und
- Anordnen einer Schablone (500) an einer Position, die den Verbindungsbereichen (320) entspricht, um die Verbindungsbereiche (320) zu schneiden und dadurch den durchbrochenen Bereich (300) fertigzustellen, so dass an dem Außenelement (100) des Haushaltsgeräts das Muster (212) entsteht.

2. Verfahren nach Anspruch 1, wobei beim Entfernen der Klebstoffschutzfolie (230) die Klebstoffschutzfolie (230) mit Ausnahme eines den Schneidebereichen (310) zugehörigen Teils der Klebstoffschutzfolie (230) entfernt wird.

3. Verfahren nach Anspruch 1, ferner mit einem Waschschritt zum Entfernen des Verbindungsbereichs (320) nach dem Schneiden des Verbindungsbereichs (320).

4. Verfahren nach Anspruch 1, wobei beim Entfernen der Trägerschutzfolie (250) der Hilfsklebstoff (240), die den Schneidebereichen (310) zugehörige Hauptfolie (210), der den Schneidebereichen (310) zugehörige Hauptklebstoff (220) und die den Schneidebereichen (310) zugehörige Klebstoffschutzfolie (230) zusammen mit der Trägerschutzfolie (250) entfernt werden.

## Revendications

1. Procédé de collage d'un film extérieur sur un appareil ménager, le procédé comprenant :
l'impression d'une couleur et d'un motif (212) pour former une apparence sur un film principal (210) ;
l'application d'un adhésif principal (220) à une surface supérieure du film principal (210) ;
le collage d'un film de protection adhésif (230) sur l'adhésif principal (220) ;
l'application d'un adhésif auxiliaire (240) à une surface inférieure du film principal (210) ;
le collage d'un film de protection de support (250) sur l'adhésif auxiliaire (240) ;
la formation de parties de découpe (310) par une demi-découpe définie en tant que découpe du film de protection adhésif (230), de l'adhésif principal (220) et du film principal (210) uniquement, dans lequel des parties de liaison (320) sont formées entre les parties de découpe (310) adjacentes et les parties de liaison (320) ne sont pas découpées pendant la demi-découpe,
les parties de découpe (310) et les parties de liaison (320) étant formées pour réaliser, lorsqu'elles sont toutes retirées, une partie traversante (300) de sorte que le motif (212) soit formé sur une partie extérieure (100) de l'appareil ménager,
les parties de découpe (310) étant formées pour réaliser, lorsqu'elles sont retirées, une partie principale de la partie traversante (300) ;
le retrait du film de protection adhésif (230) ;
le collage du film principal (210) sur la partie extérieure (100) de l'appareil ménager en utilisant l'adhésif principal (220) ;
le retrait du film de protection de support (250) pour retirer l'adhésif auxiliaire (240) et les parties de découpe (310), formant de ce fait la partie principale de la partie traversante (300) ; et
le placement d'un gabarit (500) à une position correspondant aux parties de liaison (320) pour découper les parties de liaison (320), achevant de ce fait la partie traversante (300) de sorte que le motif (212) soit formé sur la partie extérieure (100) de l'appareil ménager.

2. Procédé selon la revendication 1, dans lequel, lorsque le film de protection adhésif (230) est retiré, le reste du film de protection adhésif (230) à l'exception d'une partie du film de protection adhésif (230) correspondant aux parties de découpe (310) est retiré.

3. Procédé selon la revendication 1, comprenant en outre un processus de lavage pour retirer la partie de liaison (320) après la découpe de la partie de liaison (320).

4. Procédé selon la revendication 1, dans lequel, lorsque le film de protection de support (250) est retiré, l'adhésif auxiliaire (240), le film principal (210) correspondant aux parties de découpe (310), l'adhésif principal (220) correspondant aux parties de découpe (310) et le film de protection adhésif (230) correspondant aux parties de découpe (310) sont retirés avec le film de protection de support (250).
